(19) Europäisches Patentamt
European Patent Office
Office européen des brevets

(11) **EP 4 559 789 A1**

(12) **EUROPEAN PATENT APPLICATION**

(43) Date of publication:
**28.05.2025 Bulletin 2025/22**

(21) Application number: **24213464.1**

(22) Date of filing: **17.11.2024**

(51) International Patent Classification (IPC):
**B62H 3/12** (2006.01)    **B66D 1/02** (2006.01)
**B66D 1/36** (2006.01)    **E04H 6/00** (2006.01)
**B25H 1/00** (2006.01)

(52) Cooperative Patent Classification (CPC):
**B62H 3/12; B25H 1/0014; B66D 1/02; B66D 1/36; E04H 6/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.11.2023 BE 202300086**

(71) Applicant: **Steng BV**
**1910 Kampenhout (BE)**

(72) Inventor: **Stas, Bart**
**1910 Kampenhout (BE)**

(54) **BICYCLE SUSPENSION MODULE AND SYSTEM FOR STORING BICYCLES**

(57)    The present invention relates to a bicycle suspension module (70) comprising a housing component (30); a carrying component (40); characterized in that the bicycle suspension module (70) further comprises: a weight compensation element (50) encompassed within the housing component (30), the weight compensation element (50) comprising at least one power spring (6) and an axle (5), supporting the power spring (6) within the housing component (30), wherein the power spring (6) is connected to the axle (5) and the housing component (30); and wherein: i. the carrying component (40), for use, can be extended downwardly from the housing component (30) to a downward position, to which carrying component (40) a bicycle to be stored having a weight A (60) can be attached; ii. the carrying component (40), for use, can be moved upwardly from the downward position to an upper position, towards the housing component (30) to suspend the bicycle (60), preferably in an upright position; iii. the weight compensation element (50) partially or wholly compensates the bicycle weight A when, for use, the bicycle (60) is attached to the carrying component (40); iv. the power spring (6) is wound around the axle (5) when the carrying component (40) is extended downwardly and unwound again into the housing component (30) when the carrying component (40), is moved upward.

Fig. 12

EP 4 559 789 A1

**Description**

FIELD OF THE INVENTION

The present invention relates to an improved module for storing and suspending bicycles, in particular heavy bicycles such as electrical bicycles, a system including said module, a method for assembling the same and a method and use thereof for storing bicycles.

BACKGROUND OF THE INVENTION

The storage of bicycles when not in use often takes up precious floor space, for example in garages, apartments and other environments which presents their owners with a significant challenge. Not only do they take up floor space but the bicycles can be damaged, or cause damage, when falling over and/or colliding with people or objects if they are not properly stored.

Today, various systems for storage of bicycles have been proposed which store bicycles in an elevated location, such as a ceiling. The cheapest solution can be as simple as hooks fixed to a wall or ceiling while more expensive and complex systems allow bicycles to be stored and moved close to one another to arrange them in the most space efficient manner.

For example, EP3366554 discloses a bicycle storage system comprising a suspension device which may hold a bicycle and is slidably supported in a guide rail.

DE3245243 discloses a bicycle holding and guiding device that enables bicycles to be securely stored without requiring ground-based support elements wherein a locking mechanism allows the bicycle to be securely fixed to the storage device using a locking hook and a bracket.

Although the existing bicycle storage systems have advantages, there also exist some disadvantages. Use of the storage systems described above and in particular ceiling storage systems, may not be convenient for teenagers or elderly people when they try to lift and store their bicycles since the component to which the bicycle is to be suspended is generally above the user's head height. Furthermore, there is a rapidly increasing percentage of electrical bikes in households all over the world. Unfortunately, electrical bicycles carry the extra weight of the drive motor and the battery which in general makes them much heavier compared to traditional bicycles. The same problem persists in cargo bicycles which are equipped to transport children or goods, but are also much heavier than a traditional bicycle. This additional weight makes them difficult to store, even for an average person, in particular when they need to be manually lifted to a ceiling type storage system, increasing the risk on accidents or personal injuries during an attempt to store a bicycle due to the position of the user's back, shoulders and neck.

US3770133 describes a ceiling bike storage system designed on the principle of a vertically sliding garage door opener wherein the bicycle is moved along a channelled track extending from the floor to the ceiling and along the ceiling.

US2012/0068133 discloses an overhead storage device featuring a power pulley, a constant torque spring providing consistent torque to the power pulley, a cable with an attachment mechanism, and a special locking mechanism comprising a pawl and ratchet unit in combination with a release cord allowing for controlled lowering and locking of loads at any position. The device's unique feature is the continuous application of torque by the spring, enabling automatic winding of the cable unless restrained.

WO2016/008477 describes a device for storing bicycles under a building ceiling having a first rail which can be connected to the ceiling, a second rail which can be connected to the ceiling and is spaced apart from the first rail, a third rail, which is pivotably fastened to a free end of the second rail and at least one carrier fastened to the third rail for receiving one or more bicycles, and a steel cable connected to the third rail and to a winch and an electric motor to move the bicycle towards the ceiling.

US2007/0267612 describes a retractable load support system designed to facilitate the controlled lifting and lowering of loads. It features a gerotor mechanism as an essential component to dampen the lifting speed, ensuring safety and preventing damage to the load. The system further incorporates a biasing device, e.g. a first spring and a second spring, connected to the gerotor applying a biasing force, a one-way bearing that allows controlled load lifting and a ratchet assembly that prevents unintended load elevation.

However, these systems are complicated, expensive and may require extensive energy, space and labour to install.

A bicycle storage module or system, in particular a ceiling storage system for storing and suspending heavy bicycles such as some mountain bikes, traditional steel bicycles, electrical bicycles, cargo bicycles and others, preferably satisfies the following requirements: simplicity; convenience; safety; easy-to-use and installation. Therefore, there remains a need for a simple and easy-to-use bicycle storage module or a system comprising said module, which can suspend bicycles, in particular heavy bicycles, in a space-efficient manner while decreasing the risk on accidents or personal injuries.

SUMMARY OF THE INVENTION

The inventors have now surprisingly found that it is possible to provide an improved module for suspended storage of bicycles or alternatively, other heavy items, and a system comprising said module fulfilling the above-mentioned needs.

The present invention provides a bicycle suspension module (70) comprising:

- a housing component (30);
- a carrying component (40);

characterized in that the bicycle suspension module (70) further comprises:

- a weight compensation element (50) encompassed within the housing component (30); the weight compensation element (50) comprising at least one power spring (6) and an axle (5), supporting the power spring (6) withing the housing component (30), wherein the power spring (6) is connected to the axle (5) and the housing component (30);

and wherein:

i. the carrying component (40), for use, can be extended downwardly from the housing component (30) to a downward position, to which carrying component (40) a bicycle to be stored having a weight A (60) can be attached;

ii. the carrying component (40), for use, can be moved upwardly from the downward position to an upper position, towards the housing component (30) to suspend the bicycle (60), preferably in an upright position;

iii. the weight compensation element (50) partially or wholly compensates the bicycle weight A when, for use, the bicycle (60) is attached to the carrying component (40), preferably the weight compensation element (50) is selected so as to compensate between 10 and 200 wt% of the bicycle weight A;

iv. the power spring (6) is wound around the axle (5) when the carrying component (40) is extended downwardly and unwound again into the housing component (30) when the carrying component (40), is moved upward.

The invention further provides a system for the storage of bicycles (72) comprising:

- an elongate supporting member (80);
- at least one bicycle suspension module (70) according to the present invention,

wherein the module (70) is supported by and can travel along the supporting member (80).

The invention further provides a system for the storage of bicycles (72') comprising:

- a bicycle suspension module (70'), without weight compensation element, comprising a housing component (30') and a carrying component (40'), from which carrying component (40') a bicycle (60) to be stored can be attached;

wherein the module (70) and (70') are supported by and can travel along the supporting member (80).

The present invention further provides for a method for assembling the bicycle suspension system according to the present invention and the use thereof.

BRIEF DESCRIPTION OF THE DRAWINGS

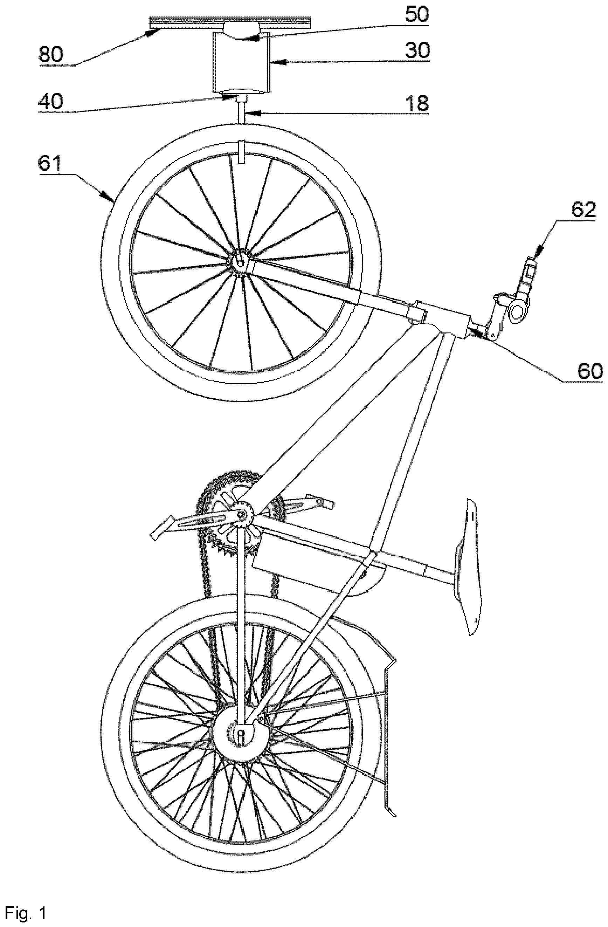

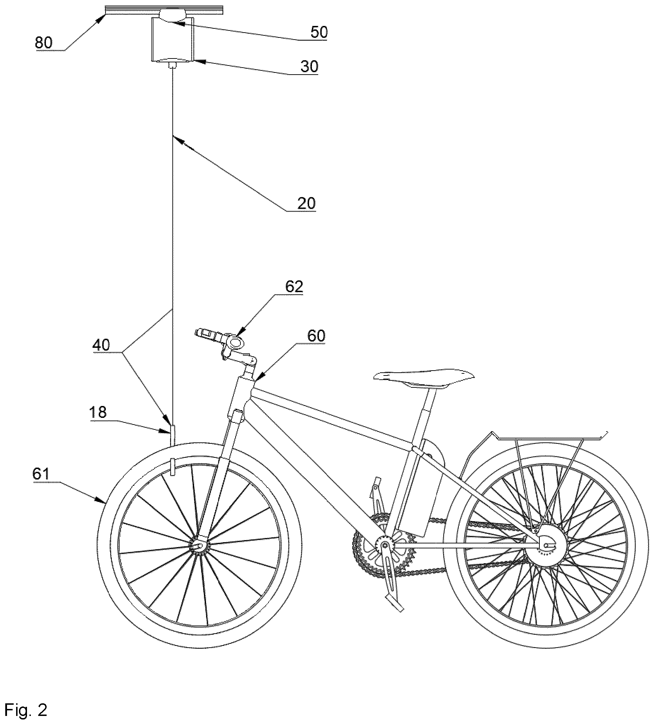

Figure 1 shows one embodiment of the bicycle suspension module (70) in use in the upper position, and an elongate supporting member (80) in a bicycle suspension system (72) embodying the invention, with a bicycle (60) suspended in an upright position. Figure 2 shows one embodiment of the bicycle suspension module (70) in use in the downward position, and an elongate supporting member (80) in a bicycle suspension system (72) embodying the invention, wherein the carrying component (40), comprising in this particular embodiment a hook formation (18) and a cable (20), is extended downward, and in particular the hook formation (18) is attached to the bicycle (60) before suspending.

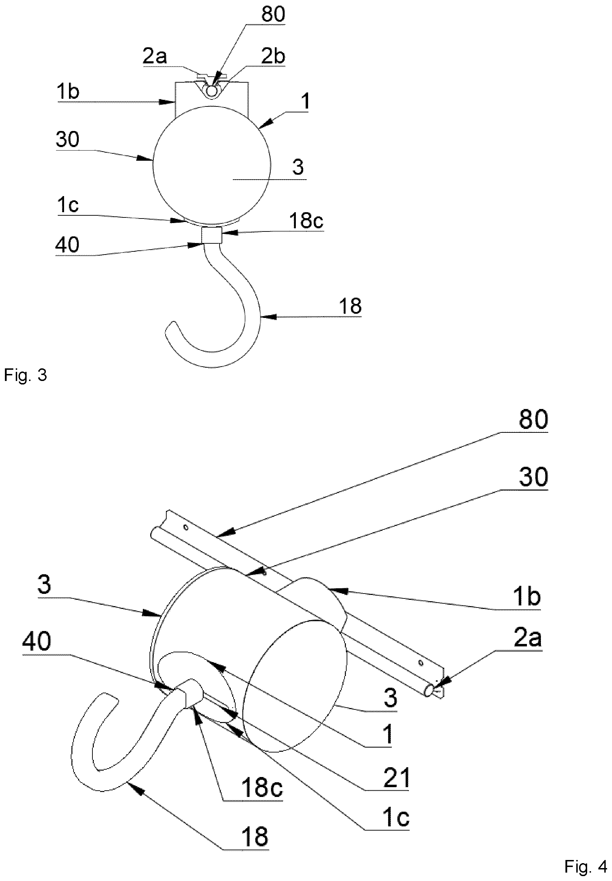

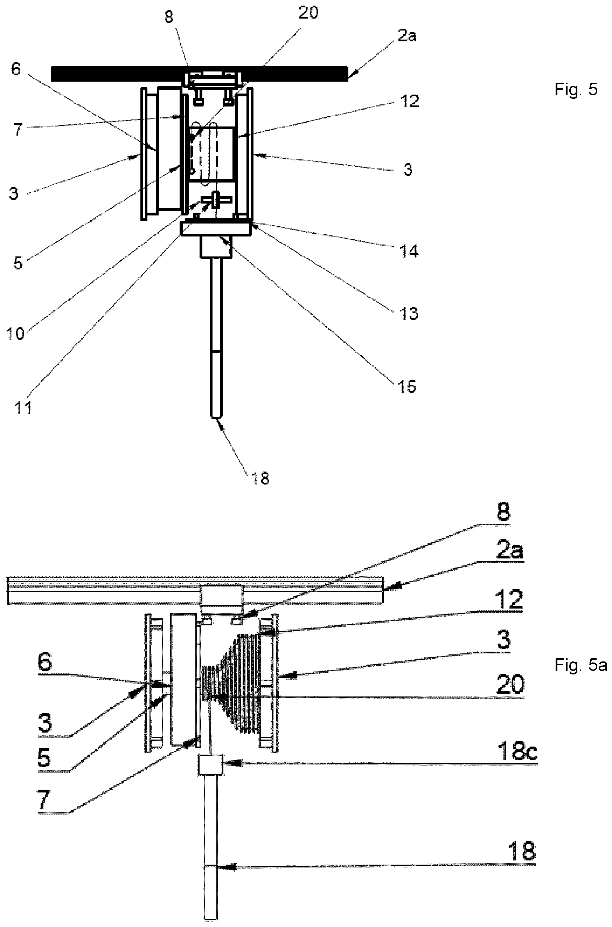

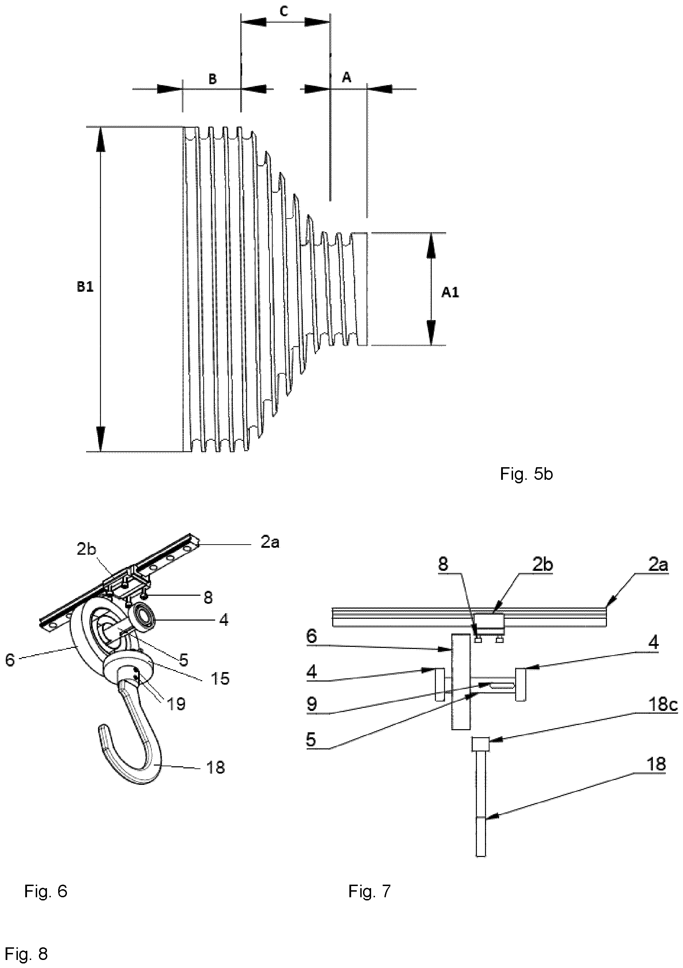

Figure 3 and 4 show a transverse and side view of the module (70) and the system (72) of Figure 1 to 2, comprising in this particular embodiment a bearing carriage (2a) and a housing component (30) comprising a core body (1), a top shield (1b) and bottom shield (1c), end cap (3), an elongate supporting member (80) comprising a rail (2a) and a carrying component (40) comprising a hook formation (18), a bumper cap (18c), a cable (20) and a cable slot (21). Figures 5, 6 and 7 show a detailed view of one embodiment of the bicycle suspension module (70) where one or more components were omitted, e.g. the core body (1), end caps (3), spring guide plate (7), cable bus (12) and cable (20), to provide a clearer view on the inside of the module (70) wherein figures 5a illustrates a particular embodiment of the present invention wherein the cable bus (12) comprises a helical threaded conical frustrum-like shape. Figure 5b is a detailed longitudinal cross-section of a cable bus (12), being a component of embodiments of the invention, comprising a helical threaded conical frustrum-like shape, a part A having a diameter A1 and a part B having a diameter B1, wherein A1<B1 and wherein the diameter of the cable bus (12) increases along the surface of the conical frustrum-like shaped cable bus going from part A to part B.

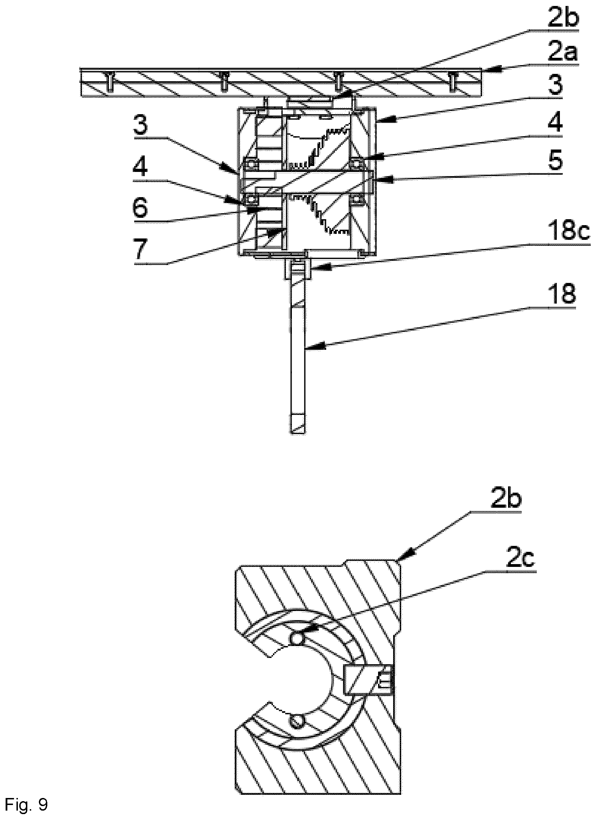

Figure 8 is a detailed longitudinal cross-section of the module (70) and the system (72) of Figure 1 to 2. Figure 9 is a detailed longitudinal cross-section of a bearing carriage (2b) comprising ball bushings (2c) connecting with the rail (2a), being components of embodiments of the invention.

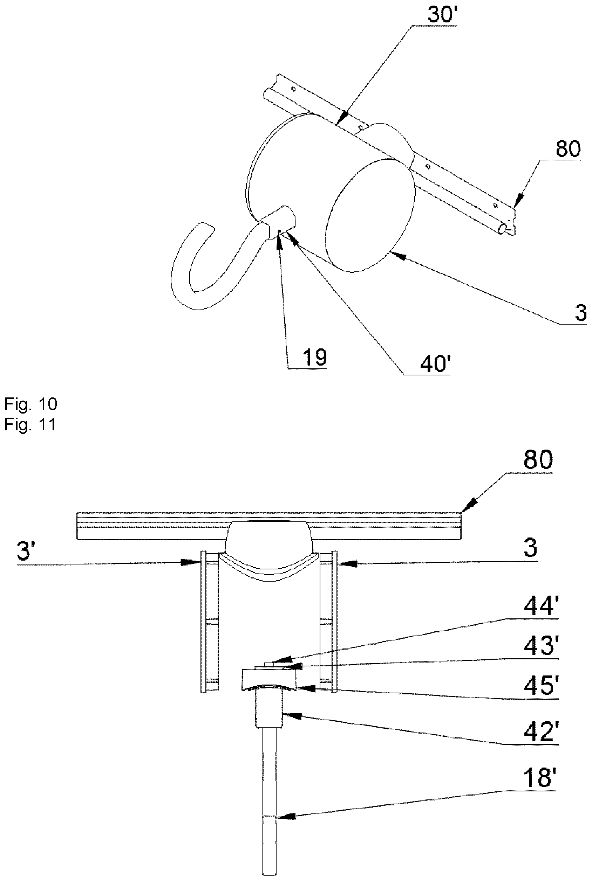

Figure 10 is a side view of the bicycle suspension module (70') without weight compensation element in use in a bicycle suspension system (72').

Figure 11 shows a detailed view of one embodiment of the bicycle suspension module (70') without weight compensation element, where one or more components were omitted, e.g. the core body (1), to provide a clearer view on the inside of the module (70').

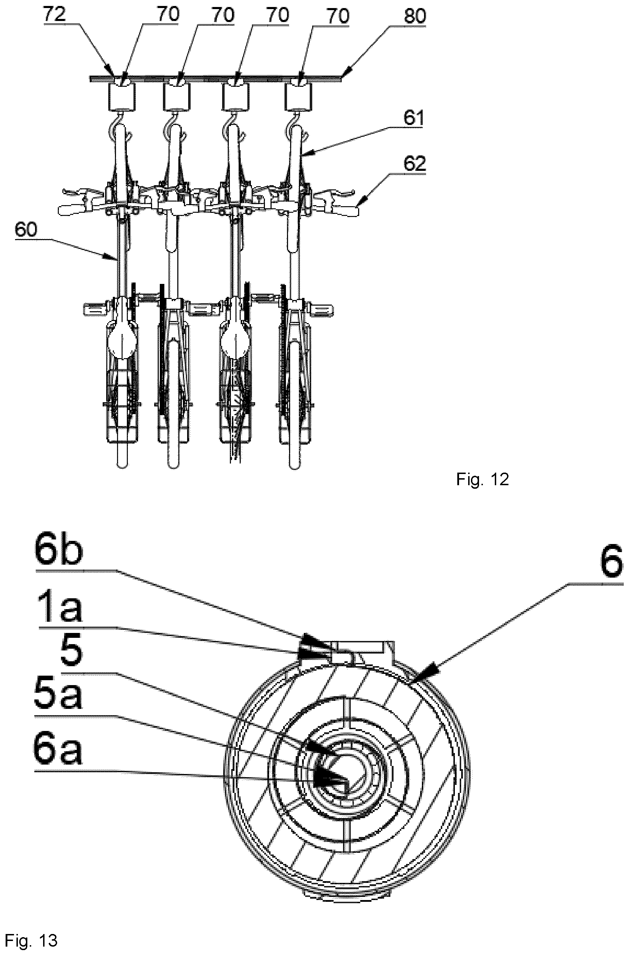

Figure 12 shows one embodiment wherein multiple bicycle suspension modules (70) are in use in the upper position, and an elongate supporting member (80) in a bicycle suspension system (72) embodying the invention, with multiple bicycles (60) suspended in alternating orientations to achieve optimal storage efficiency.

Figure 13 shows a detailed cross-section showing one embodiment of the module (70), where one or more components were omitted, to provide a clear view on the power spring (6) including the inner end connection (6a) and the outer end connection (6b), relative to the position of the axle (5) and the core body (1), all being components of embodiments of the invention.

DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a module comprising means A and B" should not be limited to devices consisting only of components A and B. It means that with respect to the present invention, the only relevant components of the device are A and B. Accordingly, the terms "comprising" and "including" encompass the more restrictive terms "consisting essentially of" and "consisting of".

As used in the foregoing and hereinafter, the following definitions apply unless otherwise noted.

The term "at least one" is intended to denote one or more than one.

The term "bicycle" or "bike" may be used interchangeably, incorporates other grammatical variations such as pedal cycle, cycle or push-bike, and is intended to refer to two-wheel human-powered or motor-powered and/or assisted vehicle formats, in particular pedal-driven, having two wheels attached to a frame, one behind the other, as well as tricycles or quad wheel arrangements. Tricycle or trike embodiments may include a configuration with two wheels at the back and one wheel at the front or alternatively, a configuration with two wheels at the front and one wheel at the back. Quad bike configurations may include those with two wheels at the front and two wheels at the back. It is understood that the storage module and system of the present invention may also be suitable for different types of vehicles such as (electrical) step scooters or mopeds. It is further understood that the storage module and system of the present invention may also be suitable for different (heavy) objects one wishes to suspend, such as but not limited to, kayaks, surfboards, car roof boxes, car bicycle racks, etc..

For the purpose of the present invention, the term "suspension" or "suspended" and the like is intended to refer to moving an object to be suspended, e.g. a bicycle (60), to a higher level at least in one position. In the case of a bicycle, this could mean that at least one of the wheels or the handle bar is pulled up, bringing the bicycle into a more upright position but not necessarily off the ground.

For the purpose of the present invention, the term "cable" is intended to refer to a wire or rope or the like, which has corresponding mechanical properties, regardless of electrical, chemical or other physical properties.

**Bicycle suspension module**

According to a first aspect, the invention relates to a bicycle suspension module (70) comprising: a housing component (30); a carrying component (40); characterized in that the bicycle suspension module (70) further comprises: a weight compensation element (50) encompassed within the housing component (30); and wherein: the carrying component (40), for use, can be extended downwardly from the housing component (30) to a downward position, to which carrying component (40) a bicycle to be stored having a weight A (60) can be attached; wherein the carrying component (40), for use, can be moved upwardly from the downward position to an upper position, towards the housing component (30) to suspend the bicycle (60), preferably in an upright position; wherein the weight compensation element (50) partially or wholly compensates the bicycle weight A when, for use, the bicycle (60) is attached to the carrying component (40), preferably the weight compensation element (50) is selected so as to compensate between 10 and 200 wt% of the bicycle weight A.

The inventors have found that the bicycle suspension module is simple and easy-to-use and can suspend bicycles, in particular heavy bicycles, in a space-efficient manner while decreasing the risk on accidents or personal injuries. In use, the user pulls down the carrying component (40) to a downward position and attaches it to the bicycle (60) (e.g. to the wheel (61) or the handlebar (62)) as shown in Figure 2. When the bicycle (60) is attached, the user simply guides the carrying component (40) and the bicycle (60) attached to it to an upper position such that the bicycle (60) is suspended, preferably in an upright or vertical position as shown in Figure 1. During this upward movement, the weight compensation element (50) compensates, partially or wholly, the weight of the bicycle which the user wishes to suspend. It is understood that a bicycle with a lower weight may need less weight compensation compared to a bicycle with a higher weight. When the weight compensation would be too high the user would not be able to pull the carrying component (40) downward, vice versa, when the weight compensation is too low the user would not be able to lift the carrying component (40) and the bicycle (60) attached to it to the suspended or upper position. The inventors have found that ideally, at least 10 wt% of the bicycle weight is compensated going up to ideally 150 wt% of the bicycle weight A.

As said, the weight compensation element (50) partially or wholly compensates the bicycle weight A when, for use, the bicycle (60) is attached to the carrying component (40), preferably the weight compensation element (50) is selected so as to compensate between 10 and 200 wt% of the bicycle weight A.

It is understood that the weight compensation element (50) may also compensate more than 100 wt% of a bicycle weight A.

It can be envisaged that a user wishes to use the same modules (70) which are all able to compensate the same wt% of the user's heaviest bicycle, while the user may also suspend lighter bicycles from the same modules (70) in the same system (72). For example, when the user suspends his heaviest bicycle, the module (70) compensates 100 wt% but when the user suspends a lighter bicycle, the module (70) compensates 150 wt% of that lighter bicycle.

In a preferred embodiment of the module (70) according to the present invention, the weight compensation element (50) is selected so as to compensate between 10 and 200 wt% of the bicycle (60) weight A, preferably between 50 and 185 wt%, even more preferably between 75 and 170 wt%, yet even more preferably between 80 and 160 wt% and most preferably in a range from more than 100 to 150 wt%.

It is understood that the wanted amount of weight compensation may vary depending on the total weight of the bicycle A. For example, a cargo bike which weighs around 75 kg will benefit from a higher weight compensation compared to a children's bike weighing around 15 kg.

As said, the bicycle suspension module according to the present invention comprises a housing component (30).

In a preferred embodiment of the module (70) according to the present invention, the housing component (30) comprises:

• a core body (1), preferably a cylindrical core body (1),
• one or more end caps (3), closing off the core body (1).

In a more preferred embodiment of the module (70) according to the present invention, the housing component (30) comprises:

• a core body (1), preferably a cylindrical core body (1);
• a top shield (1b) and a bottom shield (1c);
• one or more end caps (3), closing off the core body (1).

The top shield (1b) and the bottom shield (1c) are part of the housing component (30) and are intended on one hand to ease assembly of the module (70) and on the other hand to cover the connection of the module (70) to the elongate supporting member (80) and of the carrying component (40) to the housing component (30), respectively.

In one embodiment, the core body (1) as used in the module (70) according to the present invention, is partly or wholly made up of a polymeric or metallic material, preferably a metallic material such as aluminum.

In one embodiment, the top shield (1b) and bottom shield (1c) as used in the module (70) according to the present invention, are partly or wholly made up of a polymeric or metallic material.

In one embodiment, the one or more end caps (3) as used in the module (70) according to the present invention, are partly or wholly made up of a polymeric or metallic material, preferably a polymeric material.

In another embodiment, the one or more end caps (3) as used in the module (70) according to the present invention, are coated with a polymer, wholly or partly, in particular a rubber or soft material such as TPU. The inventors have found that when multiple modules (70) are in use in a system (72) according to the present invention, as described below, the additional coating on the end caps (3) can act as a spacer to provide a bit more space between the bicycles (60) suspended on the different modules (70) and/or as a bumper so as not to damage the modules (70) when they come into contact with each other.

As said, the bicycle suspension module according to the present invention comprises a carrying component (40).

In a preferred embodiment of the module (70) according to the present invention, the carrying component (40) comprises:

- a hook formation (18) to which part of a bicycle (60) to be stored, such as the wheel (61) or a handlebar (62), can be attached and suspended;
- a cable (20), connecting the hook formation (18) and the weight compensation element (50), wherein the cable (20) is preferably selected from a rope, a wire such as a steel wire, a chain or the like, more preferably a rope such as a nylon, aramid or para-aramid, polyester, polyfoam, polyethylene or polypropylene rope;
- optionally, a bumper cap (18c).

Preferably, the carrying component (40) comprises a bumper cap (18c), preferably in a rubber-like material such as TPU, mounted on the hook formation (18) in such a manner that it connects with the housing component (30) when the carrying component (40) is in the upper position.

It was found that the bumper cap (18c) reduces impact when in use the carrying component (40) is moved upward and reaches its most upward position connecting with the housing component (30). The bumper cap (18c) also protect both the housing component (30) as well as the carrying component (40) from damage, e.g. when the user accidentally releases the carrying component (40) before attaching the bicycle (60).

Preferably, the weight compensation element (50) compensates 100 wt% of the bicycle (60) weight A or more so that no further fixation component is needed to secure the carrying component (40) to the housing component (30) when in use, in order to retain the carrying component (40) and the bicycle (60) suspended from it, in the upper position. It is understood that, when the weight compensation element (50) does not compensate 100 wt% of the bicycle (60) weight A or more, the module (70) further comprises a fixation component (90) to secure the carrying component (40) to the housing component (30) when in use, in order to retain the carrying component (40) and the bicycle (60) suspended from it, in the upper position. It can be envisaged that this fixation component (90) may be as simple as a locking pin, a clip buckle system, a magnetic or ferromagnetic/magnetic system, a clamp fitting, a pulley system, an electromagnet/coil system or a type of hook-in system such as a protrusion on the carrying component (40), which slides into an opening on the housing component (30) which optionally locks into place by rotation.

It is understood that a hook formation (18) is only one of many options to attach a bicycle (60) to the suspension module (70) and alternatives such as a clip or a strap, are all suitable alternatives to the hook formation (18) in the carrying component (40).

Preferably, the hook formation (18) comprises at least one C-shaped hook having a straight stem portion and a C-shaped hook portion extending from the stem portion.

It can be understood that it may be desirable to store bicycles in a horizontal position rather than an upright position, e.g. to increase the space that can be used underneath. Hence alternatively, the hook formation (18) further comprises two hook portions, optionally connected by a bar, an elastic cable or the like in order to increase the stability, which may be attached to the bicycle (60) to be stored, in order to store it more in a horizontal fashion rather than an upright position. It can also be envisaged that a separate element, e.g. a bar, an elastic cable or the like which is attached to the bicycle (60) to be stored, is attached to the hook formation (18) in order to store it horizontally.

In one embodiment, the hook formation (18) as used in the module (70) according to the present invention comprises at least one C-shaped hook having a straight stem portion and a C-shaped hook portion extending from the stem portion wherein the stem portion further comprises a through-hole (18a).

In one embodiment, the hook formation (18) as used in the module (70) according to the present invention, is partly or wholly made up of a polymeric or metallic material, optionally coated or overmolded with a polymer, wholly or partly, in particular a rubber or soft material such as TPU so as not to damage the bicycle when it comes into contact with the hook formation (18), preferably an aluminum or steel core wholly or partly overmolded with a TPU layer.

In an alternative embodiment, the hook formation (18) as used in the module (70) according to the present invention has a metal core upon which at least one polymer covering is carried, e.g. wherein the covering is fixated by means of form fitting, glue, screws or any other suitable fixation means, each polymeric covering being positioned where the hook formation is most likely to make contact with parts of a bicycle that is to be attached and suspended on it.

In one embodiment, the cable (20) as used in the module (70) according to the present invention, is a rope such as a nylon, aramid or para-aramid, polyester, polyfoam, polyethylene or polypropylene rope, more preferably a nylon rope.

The inventors have found that using a rope is preferred over using a chain or steel wire because it is more flexible and easier to wind, since rope is usually softer it also abrades the other components less. The inventors have further found that the use of nylon rope is preferred because it is more durable compared to other types of rope and can better withstand friction caused during winding and unwinding while it is still an economically attractive option.

Examples of suitable commercially available rope (20) for use in the carrying component (40) according to the present invention include but are not limited to, Paracord type ropes.

In a more preferred embodiment of the module (70) according to the present invention, the carrying component (40) comprises:

- a hook formation (18) to which part of a bicycle (60) to be stored, such as the wheel (61) or a handlebar (62), can be attached and suspended comprising at least one C-shaped hook having a straight stem portion and a C-shaped hook portion extending from the stem portion wherein the stem portion further comprises a through-hole (18a);
- a cable (20), attached to the hook formation (18) by means of looping a cable end of the cable (20) through the through-hole (18a) and fastening the cable end to the cable (20) with a cable clamp (18b); connecting the hook formation (18) with the weight compensation element (50), wherein the cable (20) is preferably a rope such as a nylon, aramid or para-aramid, polyester, polyfoam, polyethylene or polypropylene rope, more preferably a nylon rope
- a bumper cap (18c), preferably in a rubber-like material, on the stem portion of the hook formation (18) and covering the through hole (18a) and the cable clamp (18b).

In an alternative embodiment of the module (70) according to the present invention, the carrying component (40) comprises:

- a hook formation (18) to which part of a bicycle (60) to be stored, such as the wheel (61) or a handlebar (62), can be attached and suspended;
- a hook holder (15), attached to the hook formation (18) by means of a first tension bush (19);
- a cable (20), attached to the hook holder by means of a second tension bush (19); connecting the hook holder (15) and hook formation (18) with the weight compensation element (50), wherein the cable (20) is preferably a rope such as a nylon, aramid or para-aramid, polyester, polyfoam, polyethylene or polypropylene rope, more preferably a nylon rope.

In one embodiment, the carrying component (40) may further include a secondary hanging formation from which additional items can be supported. This can be used to store additional items, such as bags, helmets or items of clothing.

As said, the bicycle suspension module according to the present invention comprises a weight compensation element (50).

In a preferred embodiment of the module (70) according to the present invention, the weight compensation element (50) is non-motorized.

In a preferred embodiment of the module (70) according to the present invention, the weight compensation element (50) comprises:

- at least one power spring (6);
- a cable bus (12), connecting the weight compensation element (50) to the carrying component (40) by means of a cable (20) which is wound around the cable bus (12) when the carrying component (40) is in the upper position;
- an axle (5), supporting the power spring (6) and the cable bus (12) within the housing component (30)
- optionally, a spring guide plate (7) to secure the power spring (6)
- optionally, at least one bearing (4) to support and/or aid rotation of the axle (5)
- wherein the power spring (6) is wound around the axle (5) when the carrying component (40) is extended downwardly and unwound again into the housing component (30) when the carrying component (40), is moved upward.

The term "power spring" is intended to refer to a flat strip of spring material that is cut to length, wound around a central forming arbor or axle, e.g. axle (5), and unwound into a housing, e.g. the housing component (30). Power springs store and release torque through a central axle and/or the case where it's retained, with the torque energy it stores, it can power an axle, drive or shaft. Torque is generated from either rotation of the central axle or the spring housing itself, in the present invention by rotation of the central axle (5). This torque increases throughout the total winding of the power spring. There are many types and names of power springs used in the art, such as coil springs, hair springs, spiral springs, clock springs, engine or motor springs, mainsprings, recoil springs, wind springs, retractor springs, and flat springs. Within the meaning of the present invention, it is understood that the term "power spring" is not intended to cover constant force or constant torque springs.

In a more preferred embodiment of the module (70) according to the present invention, the at least one power spring (6) does not comprise a constant force or constant torque spring.

The performance of the spring (6) is defined by the dimensions of the spring material (Thickness (t), Width (b), & Length (L)) of the spring (6) and the space available (core body (1) (D) & axle (5) (a) Diameters), as shown in Figure 13. During operation, a power spring is commonly wound and unwound between two specific points or number of turns. For example, in the suspension module (70) according to the present invention, the power spring (6) may be preloaded to 10 turns. When the carrying component (40) is extended, this winds the spring (6) an additional 10 working turns. Therefore, the spring (6) is wound from 10 turns to 20 turns when the carrying component (40) is extended to the downward position and from 20 turns back to 10 turns when the carrying component (40) is retracted to the upper position. This is considered 1 cycle. Torque and turns are the most important outputs in a power spring design. Torque commonly starts at zero, increases rapidly during the initial turns, and continues to increase at a lower rate till it is fully wound, resulting in a flattened torque curve which the inventors found very useful in the application at hand. Since this initial low torque region is less useful, the spring (6) is preferably preloaded with a certain amount of turns, depending on the spring (6) design. If more torque is required, two or more springs (6) can be placed next to each other. In this regard, also prestressed power springs can be used to produce a flatter torque gradient and to increase the torque in a housing of a given diameter. In addition, precoiling of power springs tends to improve torque output and also slightly increases the total number of turns that the power spring (6) can undergo.

In a preferred embodiment of the module (70) according to the present invention, the at least one power spring (6) is a prestressed and/or precoiled power spring (6).The torque is not the pull force on the cable (20). Torque is the rotational force exerted when the spring (6) is unwinding. Friction causes hysteresis in a power spring, meaning that a somewhat greater torque is required to wind the spring (6), e.g. exerted by the user during extension of the carrying component (40) to the downward position, than the spring (6) will provide when unwinding during the retraction of the carrying component (40) to the upper position. During unwinding, the torque (in Newton millimetre or Nmm) is transferred from the spring (6) to the axle (5) which leads to a rotation of the axle (5) and the cable bus (12) fixed to the axle (5). The rotation of the cable bus (12) will wind the cable (20) around the cable bus (12) which leads to a pulling force (in Newton) on the cable (20) pulling up the hook formation (18) and the bicycle (60) attached to it. Depending on the torque of the spring (6), a certain pulling force will be exerted and a certain weight percentage (wt%) of the bicycle weight A will be compensated during the retraction of the carrying component (40) to the upper position.

In a preferred embodiment of the module (70) according to the present invention, the at least one power spring (6) has a torque of at least 500 Newton millimetre (Nmm) and at most 15000 Nmm.

It is understood that when a higher torque is required, i.e. when the weight to be compensated is higher, more than one power spring can be used in parallel in the module (70) according to the present invention. Alternatively, the user could use multiple modules (70) according to the present invention, attached to the same object to be suspended (e.g. in case of a cargo bike or moped).

In an alternative embodiment of the module (70) according to the present invention, the module (70) comprises one or more power springs (6) resulting in a Nominal torque T, compensating a weight A, in assembled state and at a first position wherein the power springs (6) are wound 10 turns of at least:

$$T = (396 * A) - 90$$

and/or a Nominal torque T, compensating a weight A, in assembled state, at a second position wherein the power springs (6) are wound 20 turns of at most:

$$T = (674.7 * A) - 880$$

wherein A is expressed in kg and T is in Nmm.

In a more preferred embodiment of the module (70) according to the present invention, the module (70) comprises one or more power springs (6) that are selected as such that the cable (20) exerts a pulling force, when the carrying component (40) is in the downward position, of at least 50 Newton (N), preferably at least 60 N, more preferably at least 75N and at most 1200 N, preferably at most 1000 N, more preferably at most 750 N, even more preferably at most 500 N, yet even more preferably at most 400 N and most preferably at most 300 N.

There are numerous ways to connect the spring (6) to the axle (5) and the housing component (30). Material can be formed to a sharp angle to form a connection hook or bend, it can be pierced or notched to allow a connection point, and it can even be spot welded in some cases. The design challenge is to create a connection that is most importantly secure and secondly manufacturable at a reasonable cost.

The inventors have found that ideally, the power spring (6) inner end connection (6a) is secured to the axle (5) by means of a groove (5a) in the axle (5) while the power spring (6) outer end connection (6b) is hooked through a slot (1a) in the core body (1) of the housing component (30). The inventors have found that with a proper design of the end connections, the torque is increased, hysteresis is reduced and cycle life is improved.

It is understood that a power spring (6) is only one option and suitable alternatives may exist to be used in the weight compensation element (50), which lead to the same result and are hence also intended to be covered within the scope of the present invention.

In a preferred embodiment of the module (70) according to the present invention, the power spring (6) is a motor or engine spring (6), preferably a prestressed and/or tempered motor spring (6).

In this regard, it is understood that a motor spring is not to be confused with a spring motor.

Examples of suitable commercially available power springs (6) for use in the weight compensation element (50) according to the present invention include but are not limited to, Lesjöfors SPS, SF-SF springs, Kern-Liebers classic or Maximo type power springs, Hunter Spring classic or Spir'ator type power springs, in particular the Lesjöfors SPS type motor or cross-curved power springs.

In one embodiment of the module (70) according to the present invention, the weight compensation element (50) further comprises: a leaf spring added to the outer end of the power spring (6).

The inventors have found that when a leaf spring is added to the outer end of the power spring (6), the torque is increased and unwinding the spring to the outside of the housing is assisted, it can also reduce hysteresis, and improve cycle life.

As said, preferably the weight compensation element (50) comprises an axle (5) and a cable bus (12).

It is understood that the power spring (6), the axle (5) and the cable bus (12) are connected to each other in such a manner that the power spring (6) can transfer the generated torque through the axle (5) to the cable bus (12) and ultimately the cable (20) or vice versa. There are numerous ways to connect the axle (5) and the cable bus (12).

In a preferred embodiment of the module (70) according to the present invention, the axle (5) further comprises a keyseat and the cable bus (12) comprises a keyway to connect the cable bus (12) to the axle (5) by means of a key (9).

It is understood that the axle (5) and the cable bus (12) could be manufactured as one part, hence omitting the need for a key or integrating the key into the one part, but likely this would increase manufacturing cost so it is less preferred.

In a preferred embodiment of the module (70) according to the present invention, the cable bus (12) further comprises a passageway allowing fixation of the cable (20) to the cable bus.

In a preferred embodiment of the module (70) according to the present invention, the housing component (30) further comprises:

- a cable slot (21) to allow the cable (20) to move over the length of the cable bus (12) during use of the module (70).

In a preferred embodiment of the module (70) according to the present invention, the cable bus (12) in the weight compensation element (50) is made up of, at least partially, a helical threaded conical frustrum-like shape (C).

The purpose of the cable bus (12) is to hold and guide the cable (20), in this particular embodiment the cable bus (12) is threaded and the cable (20) runs through the grooves formed in between the threads.

Preferably, the cable bus (12) in the weight compensation element (50) comprises a part A having a diameter A1 and a part B having a diameter B1, wherein A1<B1 and wherein the diameter of the cable bus (12) increases, preferably in an approximately linear fashion, going from part A to part B so that in use and during downward extension of the carrying component (40), the cable (20) first winds off of the part A of the cable bus (12) and during further downward extension is wound off of part of the cable bus (12) increasing in diameter ending at part B of the cable bus (12) when reaching full extension of the cable (20).

It is understood that the reverse happens when the carrying component (40) is moved upwardly, meaning that in use and during upward movement of the carrying component (40), the cable (20) first winds up on the part B of the cable bus (12) and during further upward movement is wound up on part of the cable bus (12) decreasing in diameter ending at part A of the cable bus (12) when reaching the most upward position of the carrying component (40).

It is further understood that part A and part B can be a part of the helical threaded conical frustrum-like shape (C) or can have the same shape, each having the same or a differing slope, for example part A having a helical threaded conical frustrum-like shape (Ac) with a slope A2, part B having a helical threaded conical frustrum-like shape (Bc) with a slope B2 wherein A2<C2, B2<C2 and wherein C2 is the slope of the helical threaded conical frustrum-like shape (C). Alternatively, part A and part B can be separate sections of the cable bus (12) with a different shape, for example helical threaded cylindrical shapes wherein the diameter of the cylinder of part A is smaller than the diameter of the cylinder of part B and wherein the helical threaded conical frustrum-like shape (C) is in between parts A and B to gradually increase the diameter of the cable bus (12) going from part A to part B.

The inventors have found that the combination of a power spring (6) and a helical threaded conical frustum-like shaped cable bus (12) is beneficial since this gives rise to a flatter resulting torque gradient or resulting pulling force that has to be exerted by the user. In use and during downward extension of the carrying component (40), the power spring (6) is wound up on the axle (5) and produces an increasing torque, hence the user would feel an increasing resistance and will need to exert an increasing force to pull the carrying component (40) further down. However, by combining the power spring (6) with a helical threaded conical frustum-like shaped cable bus (12), the increasing torque during downward extension will be compensated by the increasing diameter of the cable bus (12). The cable (20) starts to wind off on the part of the cable bus (12) with the smallest diameter and during extension the cable will be wound off, of part of the cable bus (12) with an increasing diameter and ending at the part with the largest diameter when the cable (20) is fully extended. An increasing diameter of the cable bus (12) allows for a longer section of cable (20) to be pulled, resulting in a greater distance over which the force is applied. Hence, as a result of this combination the user will experience a rather constant or even a declining pulling force that will need to be exerted to extend the carrying component (40) downward, thereby increasing the comfort and improving the user experience. The reverse happens when the carrying component (40) is moved upward so that the carrying component (40) and the bicycle (60) attached are lifted with a rather constant or increasing force.

It was found that both the type of power spring (6) as well as the shape and in particular the diameter of the cable bus (12) may influence the generated pulling force and hence the amount of weight compensation, both can be selected and modified in function of the total weight to be compensated. The unique combination of a power spring (6) with a helical threaded conical frustum-like shaped cable bus (12) as disclosed in the present invention, results in a very comfortable user experience of the bicycle storage module while still maintaining a relatively simple design.

In a more preferred embodiment of the module (70) according to the present invention, the weight compensation element (50) comprises:

- at least one power spring (6);
- a cable bus (12), connecting the weight compensation element (50) to the carrying component (40) by means of a cable (20) which is wound around the cable bus (12) when the carrying component (40) is in the upper position;
- an axle (5), supporting the power spring (6) and the cable bus (12) withing the housing component (30)
- a spring guide plate (7) to secure the at least one power spring (6)
- at least two bearings (4), one on each side of the axle (5) to support and/or aid rotation of the axle (5)
- wherein in use the power spring (6) is wound around the axle (5) when the carrying component (40) is extended downwardly and unwound again into the housing component (30) when the carrying component (40), is moved upward.

In a yet even more preferred embodiment of the module (70) according to the present invention, the weight compensation element (50) comprises:

- at least one power spring (6);
- a cable bus (12), connecting the weight compensation element (50) to the carrying component (40) by means of a cable (20) which is wound around the cable bus (12) when the carrying component (40) is in the upper position;
- an axle (5), supporting the power spring (6) and the cable bus (12) withing the housing component (30)
- a spring guide plate (7) to secure the at least one power spring (6)
- at least two bearings (4), one on each side of the axle (5) to support and/or aid rotation of the axle (5)
- wherein in use the power spring (6) is wound around the axle (5) when the carrying component (40) is extended downwardly and unwound again into the housing component (30) when the carrying component (40), is moved upward;
- and wherein the cable bus (12) in the weight compensation element (50) is made up of, at least partially, a helical threaded conical frustrum-like shape and/or comprises a part A having a diameter A1 and a part B having a diameter B1, wherein A1<B1 and wherein the diameter of the cable bus (12) increases, preferably in an approximately linear fashion, going from part A to part B so that in use and during downward extension of the carrying component (40), the cable (20) first winds off of the part A of the cable bus (12) and during further downward extension is wound off of part of the cable bus (12) increasing in diameter ending at part B of the cable bus (12) when reaching full extension of the cable (20);

and the housing component (30) comprises:

- a cable slot (21) to allow the cable (20) to move over the length of the cable bus (12) during use of the module (70).

The inventors have found that a spring guide plate (7) will aid in securing the power spring (6) in place, i.e. to ensure that the spring retains its planar shape, during operation of the module (70) itself but also when the module (70) is used in the system (72) according to the present invention, as described below. The plate (7) hence will increase the durability and robustness of the module (70) according to the present invention.

The inventors have further found that the use of bearings (4) aid in smooth rotation of the axle (5), during operation of the module (70) itself. Without bearings (4), the axle (5) rotates within a seat in the end caps (3), leading to increased wear and tear on the end caps (3) as well as the axle (5) itself. When bearings (4) are fixed in the seats of the end caps (3), the axle (5) rotates within these bearings (4) which will further increase the durability and robustness of the module (70) according to the present invention.

Examples of suitable commercially available bearings (4) for use in the weight compensation element (50) according to the present invention include but are not limited to SKF type 6004-2RS ball bearings.

In a preferred embodiment, the module (70) according to the present invention further comprises a cable guide component (10,10a,11), comprising an axle (10) supported in an axle support (10a), and a bearing (11), wherein the axle support (10a) preferably is part of the housing component (30), in particular part of the core body (1), guiding the cable (20) during upward or downward movement of the carrying component (40).

The inventors have found that by including this cable guide component (10, 10a, 11), the friction on the cable (20) is reduced during winding and unwinding, when the module (70) is in use thereby reducing the friction loss since the cable (20) does not drag over the housing component (30) but is guided by the bearing (11) in the cable guide component. The cable guide component (10, 10a, 11), hence will further increase the durability and robustness of the module (70) according to the present invention.

Examples of suitable commercially available bearings (11) for use in the cable guide component (10, 10a, 11) according to the present invention include but are not limited to, SKF type 625-zz ball bearings.

In a preferred embodiment, the module (70) according to the present invention further comprises:

- at least one ferromagnetic or magnetic element (16), embedded within or connected to the carrying component (40);
- at least one ferromagnetic or magnetic element (13), embedded within or connected to the housing component (30);

wherein the ferromagnetic or magnetic element (13) and (16) are selected such that a magnetic pulling force is exerted between elements (13) and (16).

As said, the ferromagnetic or magnetic element (13) and (16) are selected such that a magnetic pulling force is exerted between elements (13) and (16). In practice, this means that when element (13) is a ferromagnetic element, element (16) must be a magnetic element and vice versa. In case element (13) is a magnetic element, element (16) may be a magnetic element as well and vice versa, as long as the magnetic orientations are arranged such that a magnetic pulling force is exerted between both elements and they do not repel each other.

The inventors have found that, when the weight compensation element (50) does not compensate 100 wt% of the bicycle (60) weight A or more, the addition of elements (13) and (16) to module (70) may act as the fixation component (90), as described above, to secure the carrying component (40) to the housing component (30) when in use, in order to retain the carrying component (40) and the bicycle (60) suspended from it, in the upper position. Furthermore, the magnetic pulling force also compensates a part of the bicycle (60) weight when in the upper position. It can be envisaged that, e.g. to produce a more economical module (70), a power spring (6) with a lower torque can be selected when the elements (13) and (16) are present and compensate an additional part of the bicycle weight.

In a preferred embodiment, the ferromagnetic element (13) or (16) in the module (70) according to the present invention is preferably attached to the housing component (30) or the carrying component (40) by means of one or more bolts and comprises one or more of: a steel plate or a steel washer, more preferably the housing component (30) further comprises a magnet holding plate (13a) to which the ferromagnetic element (13) is attached by means of one or more bolts (14).

In a preferred embodiment, the magnetic element (13) and/or (16) in the module (70) according to the present invention are preferably embedded within and fixed to the housing component (30) and/or the carrying component (40), respectively, by means of one or more bolts (17) and comprises one or more Neodymium magnets, preferably having a total pulling force of at least 40N, preferably at least 50 N, more preferably at least 75 N, even more preferably at least 100 N and/or at most 200 N.

It is understood that when bolts are used, the housing component (30) and/or the carrying component (40) may further comprise a threaded insert to allow fixation of the bolts.

Examples of suitable commercially available magnetic elements (16) for use in the module (70) according to the present invention include but are not limited to neodymium block magnets with a countersunk hole, N35 magnetisation and nickel-plated.

Examples of suitable commercially available ferromagnetic elements (13) for use in the module (70) according to the present invention include but are not limited to steel plates or washers such as bodywork rings, optionally galvanized bodywork rings.

In a preferred embodiment, the module (70) according to the present invention further comprises:

- a bearing carriage (2b), preferably a linear-motion bearing carriage and more preferably a linear-motion ball bearing carriage (2b) including one or more pairs of ball bushings (2c) arranged on at least two spaced, parallel axes.

Preferably, the bearing carriage (2b) is attached to the housing component (30) by means of one or more bolts (8).

Examples of suitable commercially available bearing carriages (2b) for use in the module (70) according to the present invention include but are not limited to, flange carriages of the type H15W or carriages of the type SBR12UU.

In an advantageous embodiment, the bicycle suspension module (70) according to the present invention comprises:

- a housing component (30);
- a carrying component (40);

characterized in that the bicycle suspension module (70) further comprises:

- a weight compensation element (50) encompassed within the housing component (30); the weight compensation element (50) comprising at least one power spring (6) and an axle (5), supporting the power spring (6) withing the housing component (30), wherein the power spring (6) is connected to the axle (5) and the housing component (30);

and wherein:

i. the carrying component (40), for use, can be extended downwardly from the housing component (30) to a downward position, to which carrying component (40) a bicycle to be stored having a weight A (60) can be attached;

ii. the carrying component (40), for use, can be moved upwardly from the downward position to an upper position, towards the housing component (30) to suspend the bicycle (60), preferably in an upright position;

iii. the weight compensation element (50) partially or wholly compensates the bicycle weight A when, for use, the bicycle (60) is attached to the carrying component (40), preferably the weight compensation element (50) is selected so as to compensate between 10 and 200 wt% of the bicycle weight A;

iv. the power spring (6) is wound around the axle (5) when the carrying component (40) is extended downwardly and unwound again into the housing component (30) when the carrying component (40), is moved upward;

wherein the weight compensation element (50) further comprises:

- a cable bus (12), connecting the weight compensation element (50) to the carrying component (40) by means of a cable (20) which is wound around the cable bus (12) when the carrying component (40) is in the upper position;
- a spring guide plate (7) to secure the at least one power spring (6);
- at least one bearing (4) to support and/or aid rotation of the axle (5)
- wherein the axle (5), supports the power spring (6) and the cable bus (12) withing the housing component (30).

In a particular advantageous embodiment, the bicycle suspension module (70) according to the present invention comprises:

- a housing component (30);
- a carrying component (40);

characterized in that the bicycle suspension module (70) further comprises:

- a weight compensation element (50) encompassed within the housing component (30) the weight compensation element (50) comprising at least one power spring (6) and an axle (5), supporting the power spring (6) withing the housing component (30), wherein the power spring (6) is connected to the axle (5) and the housing component (30);

and wherein:

i. the carrying component (40), for use, can be extended downwardly from the housing component (30) to a downward position, to which carrying component (40) a bicycle to be stored having a weight A (60) can be attached;

ii. the carrying component (40), for use, can be moved upwardly from the downward position to an upper position, towards the housing component (30) to suspend the bicycle (60), preferably in an upright position;

iii. the weight compensation element (50) partially or wholly compensates the bicycle weight A when, for use, the bicycle (60) is attached to the carrying component (40), preferably the weight compensation element (50) is selected so as to compensate between 10 and 200 wt% of the bicycle weight A;

iv. the power spring (6) is wound around the axle (5) when the carrying component (40) is extended downwardly and unwound again into the housing component (30) when the carrying component (40), is moved upward;

wherein the carrying component (40) comprises:

- a hook formation (18) to which part of a bicycle (60) to be stored, such as the wheel (61) or a handlebar (62), can be attached and suspended;
- a cable (20), connecting the hook formation (18) and the weight compensation element (50), wherein the cable (20) is preferably a rope, more preferably a nylon rope;

wherein the weight compensation element (50) comprises:

- a cable bus (12), connecting the weight compensation element (50) to the carrying component (40) by means of a cable (20) which is wound around the cable bus (12) when the carrying component (40) is in the upper position;
- a spring guide plate (7) to secure the at least one power spring (6)
- at least two bearings (4), one on each side of the axle (5) to support and/or aid rotation of the axle (5);
- wherein the axle (5), supports the power spring (6) and the cable bus (12) withing the housing component (30);
- wherein the cable bus (12) in the weight compensation element (50) is made up of, at least partially, a helical threaded conical frustrum-like shape and/or comprises a part A having a diameter A1 and a part B having a diameter B1, wherein A1 <B1 and wherein the diameter of the cable bus (12) increases, preferably in an approximately linear fashion, going from part A to part B so that in use and during downward extension of the carrying component (40), the cable (20) first winds off of the part A of the cable bus (12) and during further downward extension is wound off of part of the cable bus (12) increasing in diameter ending at part B of the cable bus (12) when reaching full extension of the cable (20);

and wherein the housing component (30) comprises:

- a core body (1), preferably a cylindrical core body (1),
- one or more end caps (3), closing off the core body (1);
- optionally, a top shield (1b) and bottom shield (1c);
- a cable slot (21) to allow a cable (20) to move over the length of the cable bus (12) during use of the module (70).

Preferably, at least parts of, the carrying component (40), the housing component (30), and/or the weight compensation element (50), as used in the module (70) according to the present invention are partly or wholly made up of a polymeric material such as but not limited to, PLA, ASA, ABS, PC, PA, PETG and carbon fibre or glass (fibre) reinforced alternatives of the forementioned materials, more preferably PLA, PC, ASA, ABS or a mixture of one or more thereof.

Alternatively, at least parts of, the carrying component (40), the housing component (30), and/or the weight compensation element (50), as used in the module (70) according to the present invention are partly or wholly made up of a metallic material such as but not limited to, aluminium, steel, stainless steel, preferably aluminium or comprise a metallic core with a coating, such as a rubber or plastic coating obtainable by for example rubber dipping or overmolding.

It is understood that these parts of the carrying component (40), the housing component (30), and/or the weight compensation element (50), as used in the module (70) according to the present invention, can be manufactured in many different ways known to the person skilled in the art. However, preferably, they are obtainable by injection moulding, compression moulding, CNC machining, 3D-printing methods and combinations of one or more thereof.

In one embodiment, at least parts of the carrying component (40), the housing component (30), and/or the weight compensation element (50) as used in the module (70) according to the present invention, are obtainable by injection moulding or compression moulding, preferably injection moulding.

In another embodiment, at least parts of the carrying component (40), the housing component (30), and/or the weight compensation element (50) as used in the module (70) according to the present invention, are obtainable by CNC machining methods such as but not limited to, CNC milling, CNC turning, CNC Electrical discharge machining, CNC grinding, CNC lasering, CNC drilling and combinations of one or more thereof.

In an alternative embodiment, at least parts of the carrying component (40), the housing component (30), and/or the weight compensation element (50) as used in the module (70) according to the present invention, is obtainable by 3D-printing methods such as but not limited to fused deposition modelling (FDM), multi-jet fusion (MJF), selective laser sintering (SLS), stereolithography (SLA), digital light process (DLP), direct metal laser sintering (DMLS), carbon DLS, polyjet, electron beam melting (EBM) and combinations of one or more thereof, more preferably fused deposition modelling.

It is understood that the "at least parts of the carrying component (40), the housing component (30), and/or the weight compensation element (50)" may include but are not limited to, the core body (1), the top shield (1b) and bottom shield (1c), the end caps (3), the axle (5), the spring guide plate (7), the cable guide axle (10), the cable bus (12), the magnet holding plate (13a), the hook holder (15), the hook formation (18) and the bumper cap (18c).

It is further understood that combinations of manufacturing techniques and materials, as described above, may be used to obtain these parts. However, preferably the same technique and material is used.

## Bicycle suspension system

It is understood that all definitions and preferences, as described above, equally apply for all further embodiments, as described below.

According to a second aspect, the present invention provides a bicycle suspension system (72) for the storage of one or more bicycles (60) comprising:

- an elongate supporting member (80);
- at least one bicycle suspension module (70) according to the present invention, as described in detail above,

wherein the module (70) is supported by and can travel along the supporting member (80).

Preferably, the suspension module (70) according to the present invention is free to travel along the elongate supporting member. The effect of this is that the bicycle can be easily moved to an optimum storage position or when the suspension system comprises a plurality of suspension modules (70), the bicycles can be moved apart for easier removal or suspension of the desired bicycle.

The skilled person will understand that the bicycle suspension system may comprise a plurality of bicycle suspension modules (70) which are arranged in series spaced along the length of the elongate supporting member, hence, in a horizontal fashion.

Preferably, once one or more bicycle suspension modules (70) have been installed on the elongate supporting member (80), a closure assembly is applied to close the end(s) of the elongate supporting member (80), to prevent accidental removal of the bicycle suspension modules (70).

In a preferred embodiment, the elongate supporting member (80) as used in the bicycle suspension system (72) according to the present invention comprises at least one rail (2a), preferably at least one linear rail (2a), which the bicycle suspension module (70) is supported by and can travel along, more preferably the bicycle suspension module (70) comprises a bearing carriage (2b), preferably a linear-motion bearing carriage and more preferably a linear-motion ball bearing carriage (2b) including one or more pairs of ball bushings (2c) arranged on at least two spaced, parallel axes which make contact with the rail (2a) to support the bicycle suspension module (70) and to enable it to move freely along the rail (2a).

It is understood that the elongate supporting member (80) may comprise a plurality of rails (2a), optionally interconnected by a coupling plate.

Preferably, the at least one rail (2a) is a linear rail (2a), more preferably a linear profiled guide rail (2a) and is formed by metal extrusion or CNC machining methods. The rail (2a) may further comprise slots that enable the fixation of the systems (72) or (72'), e.g. by means of mounting screws or bolts, or to components of the coupling plate or closure assemblies

Examples of suitable commercially available linear rails (2a) for use in the system (72) or (72') according to the present invention include but are not limited to, linear rails of the type H15L1000 or of the type SBR12.

The inventors have found that the use of a rail, in particular a linear profiled guide rail, provides a very compact solution since the rail can be relatively narrow and low. Furthermore, a bearing carriage/profiled rail combination as used in the system according to the present invention is easier to install and maintain (e.g. to lubricate) compared to systems where modules are sliding within a railing system.

In an alternative embodiment, the bicycle suspension system (72) according to the present invention may further comprise one or more spacers, each spacer being secured to a bicycle suspension module (70) or as a separate module supported by and free to travel along the supporting member (80) to increase the minimum distance that the bicycle suspension module (70) can approach an adjacent bicycle suspension module (70) on the elongate supporting member (80).

The spacers may be added to the bicycle suspension module (70) during installation of the system to reduce the likelihood of bicycles carried on adjacent bicycle suspension modules (70) damage or other-wise interfere with one another.

It is understood that not all of the bicycle suspension modules (70) need to have the same configuration of spacers; individual bicycle suspension modules (70) may be configured differently from one another.

In an alternative embodiment, the bicycle suspension system (72) according to the present invention may further comprise a security assembly to which a bicycle carried on the system can be securely connected.

It is understood that the weight compensation is not always required. For example, for lighter race bicycles or carbon-fibre bicycles there may be no need to compensate the weight but there is still a need for a suspended storage solution.

In one embodiment, the system for the storage of bicycles (72) according to the present invention, as described above, may further comprise:

• a bicycle suspension module (70'), without weight compensation element, comprising a housing component (30') and a carrying component (40'), from which carrying component (40') a bicycle (60) to be stored can be attached;

wherein the module (70) and (70') are supported by and can travel along the supporting member (80).

Preferably, the carrying component (40') in the bicycle suspension module (70'), is attached to the housing component (30') in such a way that it cannot be extended downward but it may still rotate with respect to the elongate supporting member (80), to be able to move the bicycle (60) to be stored in an optimal storage position. More preferably, the carrying component (40') comprises a hook formation (18') to which part of a bicycle (60) to be stored, such as the wheel (61) or a handlebar (62), can be attached and suspended; wherein the hook formation is able to rotate with respect to the elongate supporting member (80), is aided in the rotation by means of a bearing (41') and is attached to the housing component (30') by means of a bus (42') acting as a spacer between the hook formation (18') and the bearing (41') such that the hook formation (18') remains free to rotate and does not come into direct contact with the housing component (30'), a washer (43') and a bolt (44') on the inside of the housing component (30') and bolted into the hook formation (18'); and the housing component (30') comprises a core body (1') and one or more end caps (3').

According to a third aspect, the present invention provides a system for the storage of bicycles (72') comprising:

• an elongate supporting member (80);
• a bicycle suspension module (70'), without a weight compensation element, comprising a housing component (30) and a carrying component (40), from which carrying component (40) a bicycle (60) to be stored can be attached; wherein the module is supported by and can travel along the supporting member (80);
• optionally, at least one bicycle suspension module (70) with a weight compensation element (50), as described in detail above, that is supported by and that can travel along the supporting member (80).

It is understood that the system (72) or (72') according to the present invention may be secured to an overhead structure such as a ceiling, typically by screw, bolts, brackets or a combination of one or more thereof. Alternatively, the system (72) or (72') may be supported from a plurality of wall-mounted brackets. The type of support used does not affect other aspects of the construction and operation of the system.

According to a fourth aspect, the present invention provides a method for assembling the bicycle storage system according (72, 72'), as described in detail above, comprising the steps of:

> a. assembling at least one bicycle suspension module (70), as described in detail above;
> b. assembling an elongate supporting member (80);
> c. optionally, assembling at least one bicycle suspension module (70'), as described in detail above;
> d. optionally, attaching the at least one bicycle suspension module (70) and/or (70') to the elongate supporting member (80).

According to a fifth aspect, the present invention provides a use of a bicycle suspension module (70), as described in detail above, separately or in a bicycle storage system, as described in detail above, to store a bicycle (60) having a weight A and compensate, at least partially, the weight A during upward movement of the carrying component (40) and/or to secure the carrying component (40) in the upper position.

**Claims**

1. A bicycle suspension module (70) comprising:

> • a housing component (30);
> • a carrying component (40);

> **characterized in that** the bicycle suspension module (70) further comprises:
> a weight compensation element (50) encompassed within the housing component (30), the weight compensation element (50) comprising at least one power spring (6) and an axle (5), supporting the power spring (6) within the housing component (30), wherein the power spring (6) is connected to the axle (5) and the housing component (30); and wherein:

> > i. the carrying component (40), for use, can be extended downwardly from the housing component (30) to a downward position, to which carrying component (40) a bicycle to be stored having a weight A (60) can be attached;
> > ii. the carrying component (40), for use, can be moved upwardly from the downward position to an upper position, towards the housing component (30) to suspend the bicycle (60), preferably in an upright position;
> > iii. the weight compensation element (50) partially or wholly compensates the bicycle weight A when, for use, the bicycle (60) is attached to the carrying component (40)
> > iv. the power spring (6) is wound around the axle (5) when the carrying component (40) is extended downwardly and unwound again into the housing component (30) when the carrying component (40), is moved upward.

2. The bicycle suspension module (70) according to claim 1 wherein:
the housing component (30) comprises:

> • a core body (1), preferably a cylindrical core body (1),
> • one or more end caps (3), closing off the core body (1)
> • optionally, a top shield (1b) and bottom shield (1c).

3. The bicycle suspension module (70) according to claim 1 or 2 wherein:
the carrying component (40) comprises:

> • a hook formation (18) to which part of a bicycle (60) to be stored, such as the wheel (61) or a handlebar (62), can be attached and suspended;
> • a cable (20), connecting the hook formation (18) and the weight compensation element (50), wherein the cable (20) is preferably selected from a rope, a wire such as a steel wire, a chain or the like, more preferably a rope such as a nylon, aramid or para-aramid, polyester, polyfoam, polyethylene or polypropylene rope;
> • optionally, a bumper cap (18c).

4. The bicycle suspension module (70) according to any of claims 1 to 3 wherein: the weight compensation element (50) further comprises:

> • a cable bus (12), connecting the weight compensation element (50) to the carrying component (40) by means of a cable (20) which is wound around the cable bus (12) when the carrying component (40) is in the upper position;
> • a spring guide plate (7) to secure the at least one power spring (6);
> • at least one bearing (4) to support and/or aid rotation of the axle (5);
> • wherein the axle (5), supports the power spring (6) and the cable bus (12) within the housing component (30).

5. The bicycle suspension module (70) according to any of claims 1 to 4, wherein the cable bus (12) in the weight compensation element (50) is made up of, at least partially, a helical threaded conical frustrum-like shape.

6. The bicycle suspension module (70) according to any of claims 1 to 5, wherein the power spring (6) comprises an inner end connection (6a) which is secured to the axle (5) by means of a groove (5a) in the axle (5) and wherein the power spring (6) comprises an outer end connection (6b) which is hooked through a slot (1a) in the core body (1) of the housing component (30).

7. The bicycle suspension module (70) according to any of claims 3 to 6, wherein the cable bus (12) in the weight compensation element (50) comprises a part A having a diameter A1 and a part B having a diameter B1, wherein A1<B1 and wherein the diameter of the cable bus (12) increases, preferably in an approximately linear fashion, going from part A to part B so that in use and during downward extension of the carrying component (40), the cable (20) first winds off of the part A of the cable bus (12) and during further downward extension is wound off of part of the cable bus (12) increasing in diameter ending at part B of the cable bus (12) when reaching full extension of the cable (20).

8. The bicycle suspension module (70) according to any of claims 1 to 7, further comprising:

   • at least one ferromagnetic or magnetic element (16), embedded within or connected to the carrying component (40);
   • at least one ferromagnetic or magnetic element (13), embedded within or connected to the housing component (30);

   wherein the ferromagnetic or magnetic element (13) and (16) are selected such that a magnetic pulling force is exerted between elements (13) and (16).

9. The bicycle suspension module (70) according to any of claims 1 to 8 wherein, at least parts of, the carrying component (40), the housing component (30), and/or the weight compensation element (50) are partly or wholly made up of a polymeric or metallic material and are preferably obtainable by injection moulding, CNC machining and/or 3D-printing methods.

10. The bicycle suspension module (70) according to any of claims 1 to 9, further comprising: a bearing carriage (2b), preferably a linear-motion bearing carriage and more preferably a linear-motion ball bearing carriage (2b) including one or more pairs of ball bushings (2c) arranged on at least two spaced, substantially parallel axes.

11. A system for the storage of bicycles (72) comprising:

    • an elongate supporting member (80);
    • at least one bicycle suspension module (70) any of the preceding claims,

    wherein the module (70) is supported by and can travel along the supporting member (80).

12. The system for the storage of bicycles (72) according to claim 11, further comprising:

    • a bicycle suspension module (70'), without weight compensation element, comprising a housing component (30') and a carrying component (40'), from which carrying component (40') a bicycle (60) to be stored can be attached;

    wherein the module (70) and (70') are supported by and can travel along the supporting member (80).

13. The system for the storage of bicycles (72) according to claim 11 or 12, wherein the elongate supporting member (80) comprises:

    • a rail (2a), preferably a linear rail; and

    wherein the at least one bicycle suspension module (70) comprises:

    • a bearing carriage (2b), preferably a linear-motion bearing carriage and more preferably a linear-motion ball bearing carriage (2b) including one or more pairs of ball bushings (2c) arranged on at least two spaced, substantially parallel axes which make contact with the rail (2a) to support the bicycle suspension module (70) and to enable it to move freely along the supporting member (80).

14. A method for assembling the bicycle storage system according (72, 72') according to any of claims 11 to 13 comprising the steps of:

    a. assembling at least one bicycle suspension module (70) according to claim 10;
    b. assembling an elongate supporting member (80);
    c. optionally, assembling at least one bicycle suspension module (70'), without weight compensation element, comprising a housing component (30') and a carrying component (40'),

from which carrying component (40') a bicycle (60) to be stored can be attached;

d. attaching the at least one bicycle suspension module (70) and/or (70') to the elongate supporting member (80).

15. Use of a bicycle suspension module (70) according to any of claims 1 to 8 separately or in a bicycle storage system according to any of claims 9 to 13, to store a bicycle (60) having a weight A and compensate, at least partially, the weight A during upward movement of the carrying component (40) and/or to secure the carrying component (40) in the upper position.

50

80

30

40

18

61

62

60

Fig. 1

Fig. 2

80

2a                    2b

1b

30

1

3

1c                    18c

40

18

Fig. 3

80

30

3

1b

40                    2a

3

1

21

18c

1c

18

Fig. 4

Fig. 5

Fig. 5a

C

B

A

B1

A1

Fig. 5b

2b

2a

8

4

6

5

15

19

18

Fig. 6

8

2b

2a

6

4

4

9

18c

5

18

Fig. 7

Fig. 8

Fig. 9

30'

80

3

19

40'

Fig. 10
Fig. 11

80

3'

3

44'

43'

45'

42'

18'

72   70   70   70   70   80

61

62

60

Fig. 12

6b

1a

5

5a

6a

6

Fig. 13

**EP 4 559 789 A1**

# EUROPEAN SEARCH REPORT

**Application Number**

EP 24 21 3464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/068133 A1 (OZARSKI ROBERT [US]) 22 March 2012 (2012-03-22) * figures 1,2,6,7 * | 1-15 | INV. B62H3/12 B66D1/02 B66D1/36 E04H6/00 B25H1/00 |
| A | CN 110 979 519 B (CHANGZHOU INST TECHNOLOGY) 11 February 2022 (2022-02-11) * figure 1 * | 1,13-15 | |
| A | US 2021/300490 A1 (OZARSKI ROBERT G [US] ET AL) 30 September 2021 (2021-09-30) * figures 1,6 * | 1,4,6, 14,15 | |
| A | JP 5 717492 B2 (CHUHATSU HANBAI KK) 13 May 2015 (2015-05-13) * figure 2 * | 1,5,7 | |

| | TECHNICAL FIELDS SEARCHED (IPC) |
|---|---|
| | B62H E04H B66F B66D B25H |

The present search report has been drawn up for all claims

| Place of search | Date of completion of the search | Examiner |
|---|---|---|
| The Hague | 14 March 2025 | Booij, Nico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3464

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| US 2012068133 | A1 | 22-03-2012 | NONE | | |
| CN 110979519 | B | 11-02-2022 | NONE | | |
| US 2021300490 | A1 | 30-09-2021 | NONE | | |
| JP 5717492 | B2 | 13-05-2015 | JP | 5717492 B2 | 13-05-2015 |
| | | | JP | 2012201441 A | 22-10-2012 |

EPO FORM P0459

For more details about this annex : see Official Journal of the European Patent Office, No. 12/82

**EP 4 559 789 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3366554 A
- DE 3245243
- US 3770133 A
- US 20120068133 A
- WO 2016008477 A
- US 20070267612 A

28